# EUROPÄISCHE PATENTSCHRIFT

(11) **EP 1 425 218 B1**
(45) Veröffentlichungstag und Bekanntmachung des Hinweises auf die Patenterteilung: **26.10.2005**
(21) Anmeldenummer: 02774528.0
(22) Anmeldetag: 22.08.2002
(51) Int. Cl.: B64D 11/06, B64D 25/04, B64D 25/16

(54) **SCHWIMMWESTENTASCHE**
LIFEJACKET POUCH
POCHETTE DE GILET DE SAUVETAGE

(30) Priorität: 05.09.2001 DE 10143438
(43) Veröffentlichungstag der Anmeldung: 09.06.2004
(73) Patentinhaber: Recaro Aircraft Seating GmbH & Co. KG, 74523 Schwäbisch Hall (DE)
(72) Erfinder: FÖRSTNER, Werner, 74638 Waldenburg (DE); BIERNOTH, Peter, 74172 Neckarsulm (DE); KLEIN, Heinz-Gerhard, 74544 Michelbach (DE)
(74) Vertreter: Bartels, Martin Erich Arthur
(86) Internationale Anmeldenummer: PCT/EP2002/009368
(87) Internationale Veröffentlichungsnummer: WO 2003/024794

(56) Entgegenhaltungen:
- WO-A-87/04990
- DE-A- 19 944 619
- US-A- 3 516 098
- US-A- 3 623 683
- US-A- 4 306 748

## Beschreibung

Die Erfindung bezieht sich auf einen Fluggastsitz mit einer Schwimmwestentasche in Form eines unterhalb der Sitzfläche des Sitzes befindlichen Beutels mit relativ zueinander beweglichen Wandteilen, die längs eines Öffnungsrandes des Beutels in aneinander angenäherter Lage mittels einer Verschlußvorrichtung festlegbar sind, die zumindest ein Paar Halteelemente aufweist, um eine zwischen den Wandteilen am Öffnungsrand wirkende Schließkraft zu erzeugen, die für das Öffnen des Beutels mittels einer manuell betätigbaren Aufreißlasche überwindbar ist, die ein auf das Paar der Halteelemente einwirkendes Zugband aufweist.

Fluggastsitze mit Schwimmwestentasche der vorstehend genannten Art sind in Luftfahrzeugen der namhaftesten Hersteller weltweit in Gebrauch. Die hauptsächlichsten, an die Schwimmwestentaschen zu stellenden Anforderungen sind, daß der Öffnungsrand des Beutels normalerweise sicher verschlossen ist, so daß die im Beutel enthaltene Schwimmweste geschützt ist und für einen Gebrauchsfall unversehrt zur Verfügung steht, und daß in einem Gebrauchs- oder Notfall die Verschlußvorrichtung vom Sitzbenutzer besonders einfach und schnell für die Entnahme der Schwimmweste geöffnet werden kann.

Die üblichen Schwimmwestentaschen werden diesen Forderungen nicht in vollem Maße gerecht. Bei der derzeit üblichen Bauweise, bei der die Verschlußvorrichtung einen am Öffnungsrand des Beutels vorgesehenen, flächigen Haftverschluß aufweist, der durch ein Flausch- und Hakenband gebildet ist, zwischen denen sich die Aufreißlasche hindurch erstreckt, ist der Beutel im Bedarfsfalle zwar leicht und schnell zu öffnen, die Verschlußvorrichtung bietet jedoch keine ausreichende Sicherheit gegen ungewolltes Öffnen.

Durch die DE-A-199 44 619 ist ein Fluggastsitz bekannt mit einer an ihm angeordneten Unterbringungsmöglichkeit für eine Schwimmweste und mit den Sitzkomfort erhöhenden Polsterteilen. Dadurch, daß die Unterbringungsmöglichkeit aus mindestens einem Polsterteil gebildet ist und daß die Schwimmweste als integraler Bestandteil von dem jeweiligen Polsterteil aufgenommen ist, das auf der Oberseite der Beinauflage sich befindet, ist die in Rede stehende Polsterung durch die Schwimmweste ersetzt, so daß gegenüber bekannten Lösungen eine Gewichtsreduzierung erreicht ist, was sich günstig auf die Nutzlastensituation im Flugzeug auswirkt. Durch einfaches Spreizen der Beine des Sitzbenutzers ist die im Fluggastsitz integrierte Schwimmweste als Teil eines Polsterteils rasch zugänglich und die dahingehend bekannte Lösung bietet ausreichende Sicherheit gegen ein ungewolltes Öffnen der gefalteten Schwimmweste. Die dahingehende Lösung stellt ein anderes modernes Konzept für die Integrierung einer Schwimmweste im Fluggastsitz dar; da bei der dahingehenden Lösung aber zwingend eine Bein- oder Fußauflage vorzusehen ist, betrifft die dahingehende Lösung regelmäßig nur Fluggastsitze im First-Class- oder Business-Bereich.

Ausgehend von diesem Stand der Technik stellt sich die Erfindung die Aufgabe, einen Fluggastsitz mit Schwimmwestentasche zu schaffen, bei der die Verschlußvorrichtung eine ausreichende Sicherheit gegen ein unbeabsichtigtes Öffnen des Beutels bildet, wobei die Verschlußvorrichtung jedoch so ausgebildet ist, daß die Schwimmwestentasche im Bedarfsfalle leicht und schnell geöffnet werden kann.

Bei einem Fluggastsitz, mit Schwimmwestentasche der eingangs genannten Art ist diese Aufgabe erfindungsgemäß dadurch gelöst, daß das zumindest eine Paar Halteelemente einen Druckknopfverschluß aufweist und daß das Zugband eine Öffnung besitzt, die vom Druckknopfverschluß durchgriffen ist.

Die erfindungsgemäß vorgesehene Kombination aus einem Druckknopfverschluß und einem von demselben durchgriffenen Zugband der Aufreißlasche bietet sowohl die erstrebte Verschlußsicherheit dank der vom Druckknopfverschluß zur Verfügung gestellten, ausreichenden Schließkraft als auch die Möglichkeit des besonders einfachen und schnellen Öffnens. Dadurch, daß sich der Druckknopfverschluß durch eine Öffnung des Zugbandes hindurch erstreckt, sich das Zugband also zwischen den miteinander zusammenwirkenden Halbelementen des Druckknopfverschlusses befindet, ist die Schnappverbindung zwischen den Halbelementen bei Belastung des Zugbandes auf sichere Weise gewährleistet.

Die erfindungsgemäße Bauweise wird daher den von den weltweit maßgebenden Zulassungsbehörden für Luftfahrtgeräte aufgestellten Zulassungsrichtlinien im vollen Maße gerecht, wie beispielsweise FAR, part 25, der amerikanischen FAA.

Wenn bei vorteilhaften Ausführungsbeispielen das eine Halbelement des Druckknopfverschlusses mit dem vorderen, sich in Sitzquerrichtung erstrekkenden Tragholm des Sitzes nicht starr verbunden ist, sondern am Tragholm beweglich aufgehängt ist, indem es an einer Bandlasche in Form eines kurzen Bandstückens, das am Tragholm verankert ist, angeordnet ist, dann ergibt sich der zusätzliche besondere Vorteil, daß aufgrund der durch die Länge der Bandlasche begrenzten Beweglichkeit des Druckknopfverschlusses sichergestellt ist, daß ein sicheres Lösen der Schnappverbindung weitgehend unabhängig von der Zugrichtung sichergestellt ist, in der der Sitzbenutzer an der Aufreißlasche zieht. Damit wird die erfindungsgemäße Schwimmwestentasche auch weitergehenden Forderungskriterien namhafter Fluggerätehersteller gerecht, beispielsweise der Forderung, daß die Verschlußvorrichtung sicher gelöst werden kann, wenn der die Aufreißlasche betätigende Benutzer Zugrichtungen des Zugbandes benutzt, die innerhalb eines Winkelbereiches von zumindest 90° liegen, nämlich 45° oberhalb und 45° unterhalb der Sitzhorizontalen. Bei der zuvor erwähnten beweglichen Verbindung mit dem Tragholm ist die Verschlußvorrichtung bei Zugrichtungen des Zugbandes, die sich über einen sehr großen Winkelbereich erstrecken, leicht und sicher lösbar, so daß in einem Notfalle für den Sitzbenutzer die schnelle und leichte Erreichbarkeit der Schwimmweste sichergestellt ist.

Wenn bei bevorzugten Ausführungsbeispielen ein Wandteil des Beutels im Bereich von seinem Öffnungsrand unterhalb des Tragholmes angebracht ist, können beidseitig des das Halbelement des Druckknopfverschlußes tragenden, flexiblen Bandstückes flächige Haftelemente am Tragholm angeordnet sein, die mit am Öffnungsrand des an den Tragholm annäherbaren anderen Wandteiles des Beutels befindlichen Gegen-Haftelementen einen Flächenhaftverschluß bilden. Die Haltekraft dieses Haftverschlusses ist so ausgelegt, daß die Haftelemente außer Eingriff gebracht werden, wenn das Zugband die Schnappverbindung am Druckknopfverschlußknopf löst und dessen Halbelemente voneinander wegbewegt.

Nachstehend ist die Erfindung anhand der Zeichnung im einzelnen erläutert. Es zeigen:
- Fig. 1: einen stark schematisch vereinfacht gezeichneten Teilquerschnitt einer unter dem vorderen Tragholm eines Sitzes befindlichen Schwimmwestentasche des Standes der Technik;
- Fig. 2: eine der Fig. 1 ähnliche, stark schematisch vereinfachte Darstellung zur Verdeutlichung der Bauweise eines Ausführungsbeispieles der erfindungsgemäßen Schwimmwestentasche;
- Fig. 3: eine perspektivisch und schematisch vereinfacht gezeichnete Darstellung des Ausführungsbeispieles der geöffneten Schwimmwestentasche ohne in deren Beutel befindlichem Schwimmwestenpaket;
- Fig. 4 und 5: perspektivische und schematisch vereinfachte Darstellungen des Ausführungsbeispieles der Schwimmwestentasche in geschlossenem Zustand, wobei unterschiedliche Zugrichtungen bei den manuellen Betätigungen der Aufreißlasche für das Öffnen verdeutlicht sind, und
- Fig. 6: eine perspektivisch, abgebrochen und schematisch vereinfacht gezeichnete Darstellung der geöffneten Schwimmwestentasche mit im Beutel befindlichem Schwimmwestenpaket.

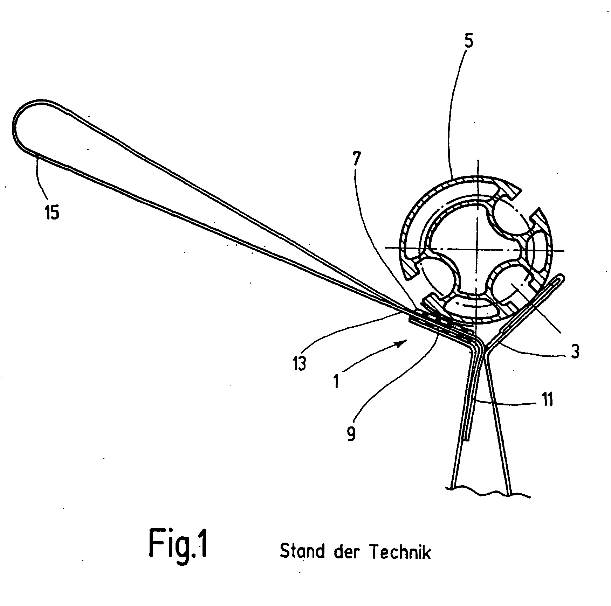

Fig. 1 zeigt von einer dem Stande der Technik entsprechenden Schwimmwestentasche lediglich den Bereich der Verschlußvorrichtung 1 des ein Schwimmwestenpaket aufnehmenden Beutels 3, welcher unterhalb eines Tragholmes 5 angeordnet ist, der die Form eines Tragrohres besitzt, das sich längs der Vorderseite eines nicht gezeigten Fluggastsitzes in Querrichtung erstreckt. Der Beutel 3 ist an seinem Öffnungsrand 7 mittels eines Flächenhaftverschlusses 9 geschlossen, der zusammenwirkende Haftelemente in Form eines Flauschbandes und eines Hakenbandes aufweist.

Zwischen Flausch- und Hakenband des Haftverschlusses 9 hindurch erstreckt sich ins Innere des Beutels 3 ein Zugband 11 einer Aufreißlasche 13, die am freien Ende eine Grifflasche 15 zur manuellen Betätigung durch den Sitzbenutzer aufweist. Wird die Aufreißlasche 13 durch Ziehen an der Grifflasche 15 betätigt, bewirkt das sich zwischen den Haftelementen des Haftverschlusses 9 erstreckende Zugband 11, das im Inneren des Beutels 3 mit dem (nicht gezeigten) Schwimmwestenpaket verbunden ist, ein Abheben der Haftverschlußelemente, d.h., das Öffnen des Beutels 3.

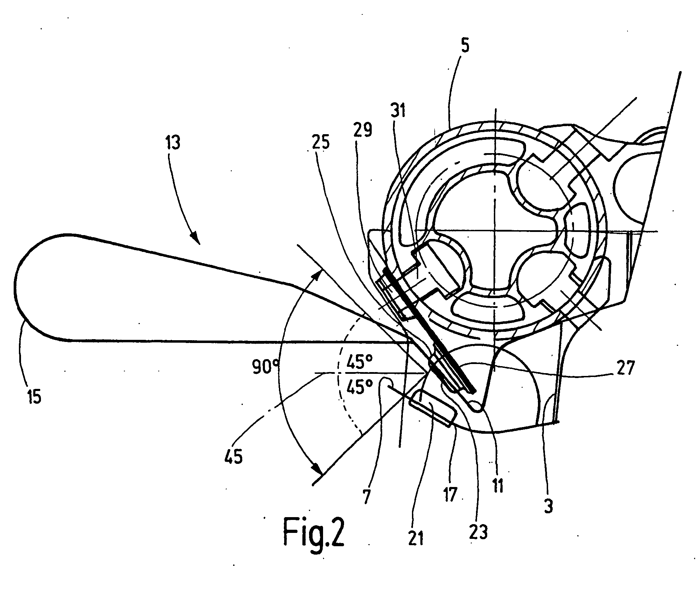

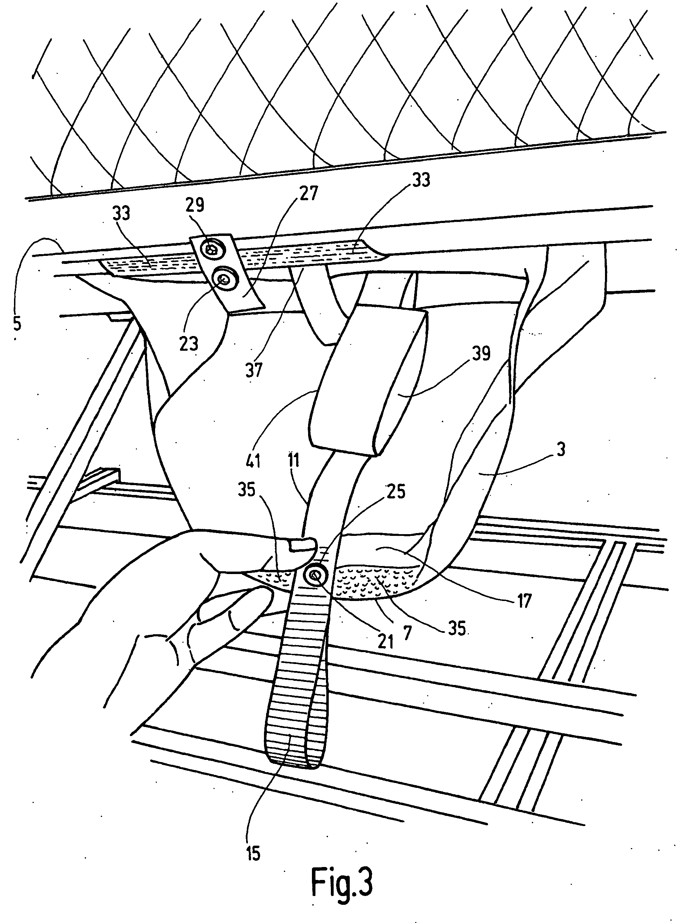

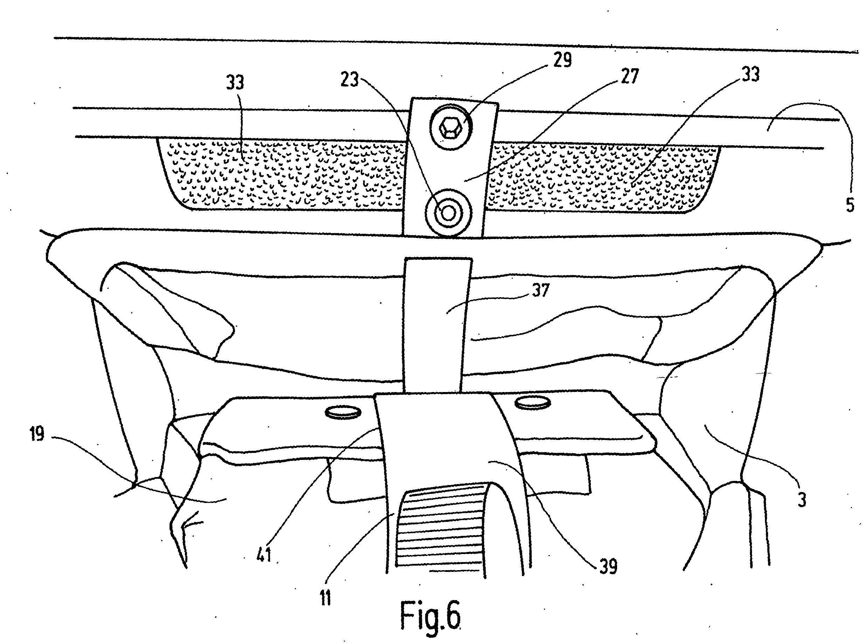

Fig. 2, die einen ähnlichen Bereich wie Fig. 1 am Tragholm 5 eines Fluggastsitzes zeigt, verdeutlicht die Bauweise des hier zu beschreibenden Ausführungsbeispieles des erfindungsgemäßen Sitzes mit Schwimmwestentasche. Fig. 2 zeigt den flexible Wandteile aufweisenden Beutel 3 ohne darin befindliches Schwimmwestenpaket in teilweise geöffnetem Zustand, wobei sich ein in der Zeichnung unten liegender, bodenseitiger Wandteil 17 des Beutels 3 mit seinem Öffnungsrand 7 in einem Abstand vom Tragholm 5 befindet. Fig. 3 zeigt einen ähnlichen Zustand, bei dem der Beutel 3 gänzlich geöffnet ist, ebenfalls ohne im Beutel 3 befindliches Schwimmwestenpaket. Die Anordnung des Schwimmwestenpaketes 19 im geöffneten Beutel 3 ist lediglich in Fig. 6 der Zeichnung dargestellt.

Wie am deutlichsten aus Fig. 2 und 3 zu ersehen ist, weist die Verschlußvorrichtung des Beutels 3 am Öffnungsrand 7 einen Druckknopfverschluß mit Druckknopf-Halbelementen 21 und 23 auf, die miteinander in Schnappverbindung bringbar sind. Die Aufreißlasche 13 weist am Übergangsbereich zwischen äußerer Grifflasche 15 und sich ins Innere des Beutels erstreckendem Zugband 11 eine Öffnung 25 auf, die vom Druckknopfverschluß 21, 23 durchgriffen ist, siehe insbesondere Fig. 3, wo gezeigt ist, daß das Druckknopf-Halbelement 21 sich durch die Öffnung 25 des Zugbandes 11 hindurch erstreckt. Bei der Darstellung von Fig. 2 ist das Zugband 11 in solcher Lage gezeigt, bei der die Öffnung 25 vom anderen Druckknopf-Halbelement 23 durchgriffen ist.

Wenn der Beutel 3 am Öffnungsrand 7 geschlossen ist, d.h., wenn der bodenseitige, das Druckknopf-Halbelement 21 tragende Wandteil 17 an den Tragholm 5 angenähert ist, ist der Druckknopfverschluß durch Eingriff des Halbelementes 21 in das am Tragholm 5 aufgehängte Druckknopf-Halbelement 23 geschlossen. Wie am deutlichesten aus Fig. 2 und 3 zu ersehen ist, ist das dem Tragholm 5 zugeordnete Halbelement 23 mit dem Tragholm 5 nicht starr verbunden, sondern über eine Haltelasche in Form eines kurzen, flexiblen Bandstückes 27 am Tragholm 5 aufgehängt. Das Bandstück 27 ist durch eine Befestigungsschraube 29 am Tragholm 5 befestigt, der als Tragrohr gestaltet ist, in das eine Einlegemutter 31 (Fig.2) eingesetzt ist, mit der die Schraube 29 in Eingriff ist.

Wie am deutlichsten aus Fig. 3 und 6 zu ersehen ist, erstrecken sich beidseits der Anbringstelle des Bandstückes 27 am Tragholm 5 flächige Haftelemente 33, die mit zugeordneten Gegen-Haftelementen 35 am Öffnungsrand 7 des Wandteiles 17 des Beutels 3 in Eingriff bringbar sind, wenn der Beutel 3 geschlossen ist.

Das Zugband 11 ist, wie am besten aus Fig. 3 und 6 zu ersehen ist, ins Innere des Beutels 3 hinein verlängert, um eine am inneren Ende 37 verankerte Auszieleine 39 zum Herausziehen des Schwimmwestenpaketes 19 (Fig.6) zu bilden. Fig. 3 zeigt, daß die Ausziehleine 39 im Innern des Beutels 3 einen Wickel 41 bildet, der das in Fig. 3 nicht gezeigte Schwimmwestenpaket 19 umschlingt, so daß bei geöffnetem Beutel 3 durch Ziehen an der Grifflasche 15 der Aufreißlasche 13 über das Zugband 11 und die Ausziehleine 39 das vom Wickel 41 umgebene Schwimmwestenpaket 19 aus dem Beutel 3 herausgezogen wird.

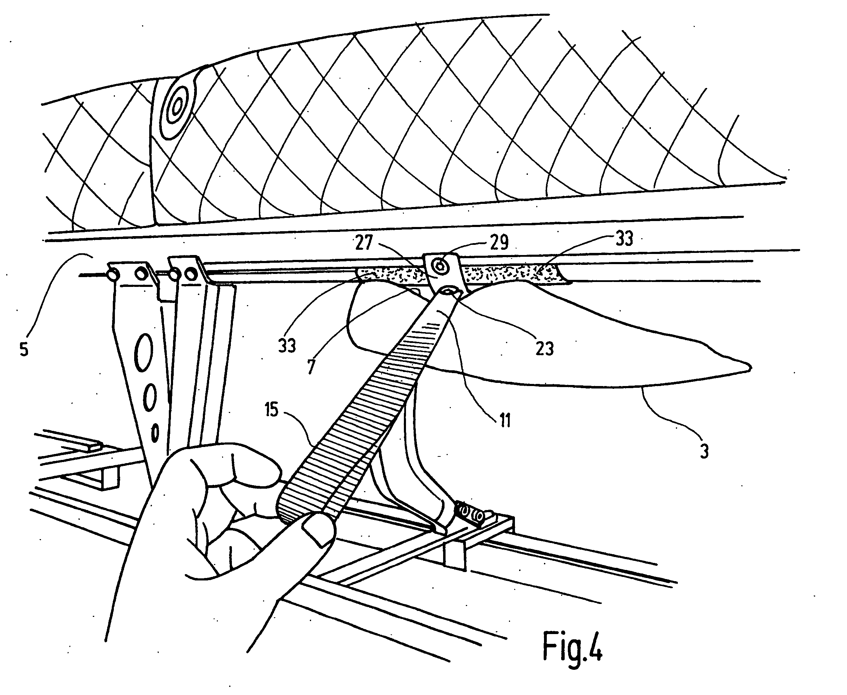

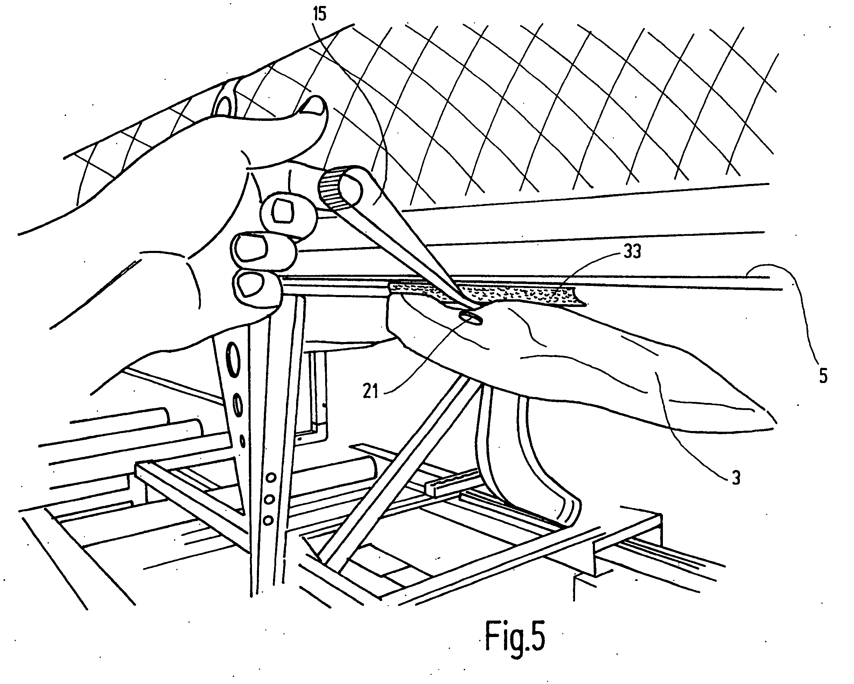

Fig. 2 verdeutlicht einen Winkelbereich von 90° der Zugrichtungen, mit denen an der Grifflasche 15 der Aufreißlasche 13 gezogen werden kann, um ein sicheres Lösen der Verschlußvorrichtung des Beutels 3 zu bewirken. Dabei erstreckt sich der Winkelbereich jeweils 45° oberhalb und unterhalb der mit 45 bezeichneten Sitzhorizoritalen. Die Fig. 4 und 5 verdeutlichen die manuelle Betätigung der Grifflasche 15 jeweils im unteren (Fig. 4) bzw. oberen (Fig. 5) Teil des Winkelbereiches. Wie ersichtlich ist, stehen dem Sitzbenutzer somit praktisch beliebige Öffnungsmöglichkeiten zur Verfügung, so daß in einem Notfall, ohne daß Sorgfalt aufgewendet werden müßte, ein schnelles Öffnen der Schwimmwestentasche erfolgen kann.

## Patentansprüche

1. Fluggastsitz, mit Schwimmwestentasche in Form eines unterhalb der Sitzfläche des Sitzes befindlichen Beutels (3) mit relativ zueinander beweglichen Wandteilen (17), die längs eines Öffnungsrandes (7) des Beutels (3) in aneinander angenäherter Lage mittels einer Verschlußvorrichtung festlegbar sind, die zumindest ein Paar Halteelemente aufweist, um eine zwischen den Wandteilen am Öffnungsrand (7) wirkende Schließkraft zu erzeugen, die für das Öffnen des Beutels (3) mittels einer manuell betätigbaren Aufreißlasche (13) überwindbar ist, die ein auf das Paar der Halteelemente einwirkendes Zugband (11) aufweist, **dadurch gekennzeichnet, dass** das zumindest eine Paar Halteelemente einen Druckknopfverschluß (21, 23) aufweist und dass das Zugband (11) eine Öffnung (25) besitzt, die vom Druckknopfverschluß (21, 23) durchgriffen ist.

2. Sitz, nach Anspruch 1, **dadurch gekennzeichnet, dass** das eine Halbelement (23) des Druckknopfverschlusses (21, 23) mit dem vorderen, sich in Sitzquerrichtung erstreckenden Tragholm (5) des Sitzes verbunden ist und das andere Halbelement (21) am Öffnungsrand (7) des bei geschlossenem Beutel (3) an den Tragholm (5) angenäherten Wandteiles (17) des Beutels (3) befestigt ist.

3. Sitz, nach Anspruch 2, **dadurch gekennzeichnet, dass** das eine Halbelement (23) des Druckknopfverschlusses mit dem Tragholm (5) beweglich verbunden ist.

4. Sitz, nach Anspruch 3, **dadurch gekennzeichnet, dass** die bewegliche Verbindung des einen Halbelementes (23) mit dem Tragholm (5) durch ein an diesem aufgehängtes, kurzes, flexibles Bandstück (27) gebildet ist, an dessen freiem Endbereich das betreffende Halbelement (23) des Druckknopfverschlusses befestigt ist.

5. Sitz, nach Anspruch 4, **dadurch gekennzeichnet, dass** ein Wandteil des Beutels (3) im Bereich von seinem Öffnungsrand unterhalb des Tragholmes (5) angebracht ist und dass beidseits des das Halbelement (23) tragenden, flexiblen Bandstückes (27) flächige Haftelemente (33) am Tragholm (5) angeordnet sind, die mit am Öffnungsrand (7) des an den Tragholm (5) annäherbaren anderen Wandteiles (17) des Beutels (3) befindlichen Gegen-Haftelementen (35) zur Bildung eines Haftverschlusses zusammen wirken.

6. Sitz, nach einem der Ansprüche 1 bis 5, **dadurch gekennzeichnet, dass** das Zugband (11) der Aufreißlasche (13) über die vom Druckknopfverschluß (21, 23) durchgriffene Öffnung (25) hinaus ins Innere des Beutels (3) hinein verlängert ist und mit ihrem verlängerten Teil eine Ausziehleine (39) zum Herausziehen eines im Beutel (3) befindlichen Schwimmwestenpaketes (19) bildet.

7. Sitz, nach einem der Ansprüche 4 bis 6, **dadurch gekennzeichnet, dass** das die bewegliche Verbindung des einen Halbelementes (23) des Druckknopfverschlusses mit dem Tragholm (5) bildende Bandstück (27) in seinem dem Halbelement (23) entgegengesetzten Endbereich durch eine Verschraubung (29, 31) mit dem Tragholm (5) des Sitzes verbunden ist.

## Claims

1. Aeroplane passenger seat, with life jacket pocket in the form of a bag (3) located below the seat surface of the seat, with wall sections (17) that are moveable relative to one another, the same being firmly affixable along an opening edge (7) of the bag (3) in a position adjacent to one another by means of a closure means, which incorporates at least one pair of holding elements in order to create a closing force acting between the wall sections on the opening edge (7), the same having to be overcome for the opening of the bag (3) by means of a manually activatible tear-off tab (13) incorporating a pull string (11) acting upon the pair of holding elements, **characterised in that** the at least one pair of holding elements incorporates a popper closure (21, 23), and **in that** the pull string (11) has an opening (25) through which the popper closure (21, 23) projects.

2. Seat according to Claim 1, **characterised in that** one half element (23) of the popper closure (21, 23) is connected with the front support beam (5) of the seat extending in a transverse direction to the seat, and **in that** the other half element (21) is affixed to the opening edge (7) of the wall section (17) of the bag (3) adjacent to the support beam (5) when the bag (3) is closed.

3. Seat according to Claim 2, **characterised in that** one half element (23) of the popper closure is moveably connected with the support beam (5).

4. Seat according to Claim 3, **characterised in that** the moveable connection of the one half element (23) with the support beam (5) is formed by a short, flexible tape (27) suspended on the same, at the free end of which the relevant half element (23) is affixed by means of the popper closure.

5. Seat according to Claim 4, **characterised in that** a wall section of the bag (3) is affixed in the area of the opening edge of the same below the support beam (5), and **in that** two-dimensional adhesive elements (33) are positioned on the support beam (5) on both sides of the flexible tape (27) supporting the half element (23), the same cooperating with the counter adhesive elements (35) located on the opening edge (7) of the wall section (17) of the bag (3) adjacent to the support beam (5) in order to form an adhesive closure.

6. Seat according to one of the Claims 1 to 5, **characterised in that** the pull tape (11) of the tear-off tab (13) extends across the opening (25) through which the popper closure (21, 23) projects into the interior of the bag (3), and **in that** the same forms a pull-out line (39) for pulling out a life jacket packet (19) located within the bag (3) with its extended section.

7. Seat according to one of the Claims 4 to 6, **characterised in that** the tape (27) forming the moveable connection between the one half element (23) of the popper closure and the support beam (5) is connected with the support beam (5) of the seat via a thread (29, 31) within the end section facing away from the half element (23).

## Revendications

1. Siège de passager, comprenant un gilet de sauvetage sous forme d'un sachet (3) situé sous le siège avec des parties de paroi (17) mobiles les unes par rapport aux autres, qui peuvent être fixées le long d'un bord d'ouverture (7) du sachet (3) dans une position cousue les unes aux autres au moyen d'un dispositif de fermeture, qui comprend au moins une paire d'éléments de serrage, afin de générer une force de fermeture agissant entre les parties de paroi sur le bord d'ouverture (7), laquelle force, pour l'ouverture du sachet (3), peut être surmontée au moyen d'une languette de déchirage (13) pouvant être actionnée manuellement qui comprend une bande de traction (11) agissant sur la paire des éléments de serrage, **caractérisé en ce qu'**une des paires d'éléments de serrage comprend une fermeture à bouton-pression (21, 23) et **en ce que** la bande de traction (11) possède une ouverture (25) qui est traversée par la fermeture à bouton-pression (21, 23).

2. Siège selon la revendication 1, **caractérisé en ce qu'**un des demi-éléments (23) de la fermeture à bouton-pression (21, 23) est relié au longeron de support avant (5) du siège s'étendant dans la direction transversale du siège et l'autre demi-élément (21) est fixé au bord d'ouverture (7) de la partie de paroi (17) du sachet (3) cousue au longeron de support (5) lorsque le sachet (3) est fermé.

3. Siège selon la revendication 2, **caractérisé en ce qu'**un des demi-éléments (23) de la fermeture à bouton-pression est relié de façon mobile au longeron de support (5).

4. Siège selon la revendication 3, **caractérisé en ce que** l'assemblage mobile entre un des demi-éléments (23) et le longeron de support (5) est formé par un morceau de bande (27) flexible, court, accroché à celui-ci, morceau de bande à la zone d'extrémité libre duquel est fixé le demi-élément (23) concerné de la fermeture à bouton-pression.

5. Siège selon la revendication 4, **caractérisé en ce qu'**une partie de paroi du sachet (3) est aménagée dans la zone de son bord d'ouverture au-dessous du longeron de support (5) et **en ce que** des deux côtés du morceau de bande (27) flexible, portant le demi-élément (23), des éléments adhésifs (33) plats sont disposés sur le longeron de support (5), lesquels éléments coopèrent avec les demi-éléments correspondants (35) situés sur le bord d'ouverture (7) de l'autre partie de paroi (17) du sachet (3) pouvant être cousue au longeron de support (5) pour former une fermeture adhésive.

6. Siège selon l'une quelconque des revendications 1 à 5, **caractérisé en ce que** la bande de traction (11) de la languette de déchirage (13) se prolonge au-delà de l'ouverture (25) traversée par la fermeture à bouton-pression (21, 23) à l'intérieur du sachet (3) et forme avec sa partie en prolongement une sangle de retrait (39) destinée à retirer un paquet de gilet de sauvetage (19) situé dans le sachet (3).

7. Siège selon l'une quelconque des revendications 4 à 6, **caractérisé en ce que** le morceau de bande (27) formant l'assemblage mobile entre un des demi-éléments (23) de la fermeture à bouton-pression et le longeron de support (5) est relié au longeron de support (5) du siège dans sa zone d'extrémité opposée au demi-élément (23) par un assemblage par vis (29, 31).
